# EUROPÄISCHE PATENTANMELDUNG

(11) **EP 2 590 313 A1**
(43) Veröffentlichungstag der Anmeldung: **08.05.2013**
(21) Anmeldenummer: 11187628.0
(22) Anmeldetag: 03.11.2011
(51) Int. Cl.: H02M 7/49, H02M 1/32

(54) **Umrichtersystem sowie leistungselektronisches System mit solchen Umrichtersystemen**

(71) Anmelder: ABB Technology AG, 8050 Zürich (CH)
(72) Erfinder: Steimer, Peter, CH-5420 Ehrendingen (CH); Apeldoorn, Oscar, 5426 Lengnau (CH)
(74) Vertreter: ABB Patent Attorneys

(57) **Zusammenfassung**

Es wird Umrichtersystem (1) mit einer Phasenspannungsquelle (2) und mit n Teilumrichtersystemen (3.1, ..., 3.n) angegeben, wobei n ≥ 1 ist und im Falle n=1 das Teilumrichtersystem (3.1) an einem Verbindungspunkt (A) mit der Phasenspannungsquelle (2) verbunden ist und im Falle n>1 die Teilumrichtersysteme (3.1, ..., 3.n) an dem Verbindungspunkt (A) mit der Phasenspannungsquelle (2) verbunden sind. Zur Beherrschung eines Fehlerstromes in einem Teilumrichtersystem (3.1, ... , 3.n) ist ein Kurzschlusselement (4) mit dem Verbindungspunkt (A) mit der Phasenspannungsquelle (2) verbunden, welches Kurzschlusselement (4) auf einem festlegbaren Spannungspotential (N1) liegt. Desweiteren wird ein leistungselektronisches System mit m Umrichtersystemen (1) angegeben, wobei m>1 ist.

## Beschreibung

### Technisches Gebiet

Die Erfindung bezieht sich auf das Gebiet der Leistungselektronik. Sie geht aus von einer Umrichtersystem sowie einem leistungselektronischen System mit solchen Umrichtersystemen gemäss dem Oberbegriff der unabhängigen Ansprüche.

### Stand der Technik

Umrichtersysteme werden heute in einer Vielzahl von Anwendungen eingesetzt. Ein in der Spannung besonders einfach zu skalierendes leistungselektronisches System mit Umrichtersystemen ist in der DE 102005040543A1 angegeben. Das leistungselektronische System der DE 102005040543A1 umfasst mindestens zwei Phasenbausteine, wobei jeder Phasenbaustein ein erstes und ein zweites Teilumrichtersystem aufweist. Jedes Teilumrichtersystem umfasst eine Induktivität und dazu in Serie geschaltete n in Serie geschaltete zweipolige Schaltzellen, wobei n ≥ 2 ist und jede Schaltzelle ansteuerbare bidirektionale Leistungshalbleiterschalter mit gesteuerter unidirektionaler Stromführungsrichtung und einen kapazitiven Energiespeicher aufweist. Für jeden Phasenbaustein ist die Induktivität des ersten Teilumrichtersystems seriell mit der Induktivität des zweiten Teilumrichtersystems verbunden. Ferner bildet für jeden Phasenbaustein der Verbindungspunkt der Induktivität des ersten Teilumrichtersystems mit der Induktivität des zweiten Teilumrichtersystems einen Phasenanschluss. An den Phasenanschlüssen ist typischerweise ein elektrisches Wechselspannungsnetz, also jeweils eine Phasenspannungsquelle, oder eine elektrische Last angeschlossen.

Im Falle eines Fehlers in einem Teilumrichtersystem eines Phasenbausteins fliesst der resultierende Fehlerstrom typischerweise über den betroffenen Phasenanschluss vom oder in das elektrisches Wechselspannungsnetz oder von der oder zu der elektrischen Last, bevor das leistungselektronische System an den Phasenanschlüssen getrennt wird. Bis diese Trennung erfolgt, kann das leistungselektronische System, insbesondere die Bauelemente das leistungselektronische System, Schaden nehmen, so dass das das leistungselektronische System repariert bzw. gewartet werden muss und die Verfügbarkeit sinkt.

### Darstellung der Erfindung

Aufgabe der Erfindung ist es deshalb, ein Umrichtersystem anzugeben, bei welchem eine verbesserte Beherrschung eines im Fehlerfall in einem Teilumrichtersystem des Umrichtersystems auftretenden Fehlerstromes möglich ist. Eine weitere Aufgabe der Erfindung ist es, ein leistungselektronisches System mit Umrichtersystemen anzugeben, welches sehr einfach und modular zu realisieren ist.

Diese Aufgaben werden durch die Merkmale des Anspruchs 1 bzw. durch die Merkmale des Anspruchs 8 gelöst. In den abhängigen Ansprüchen sind vorteilhafte Weiterbildungen der Erfindung angegeben.

Das erfindungsgemässe Umrichtersystem umfasst eine Phasenspannungsquelle und allgemein n Teilumrichtersystemen, wobei n ≥ 1 ist und im Falle n=1 das Teilumrichtersystem an einem Verbindungspunkt mit der Phasenspannungsquelle verbunden ist und im Falle n>1 die Teilumrichtersysteme an dem Verbindungspunkt mit der Phasenspannungsquelle verbunden sind. Erfindungsgemäss ist nun ein Kurzschlusselement mit dem Verbindungspunkt mit der Phasenspannungsquelle verbunden, welches Kurzschlusselement auf einem festlegbaren Spannungspotential liegt. Das Kurzschlusselement dient der galvanischen Verbindung zum festlegbaren Spannungspotential N1, d.h. insbesondere des Kurzschlusses der Phasenspannungsquelle im Falle eines auftretenden Fehlerstromes aufgrund eines Fehlers in einem Teilumrichtersystem. Der Fehlerstrom teilt sich vorteilhaft auf der Seite der Phasenspannungsquelle, aber auch auf das Teilumrichtersystem oder auf die Teilumrichtersysteme auf, so dass im Falle mehrerer Teilumrichtersysteme kurzzeitig auch Teilströme durch die vom Fehler nicht betroffenen Teilumrichtersysteme entstehen, bevor das Umrichtersystem von der Phasenspannungsquelle oder von einer angeschlossenen elektrischen Last getrennt wird. Somit lässt sich ein im Fehlerfall in einem Teilumrichtersystem auftretender Fehlerstrom sehr einfach beherrschen, bevor die Phasenspannungsquelle abgetrennt wird.

Das erfindungsgemässe leistungselektronische System umfasst m der vorstehend genannten erfindungsgemässen Umrichtersysteme, wobei m>1 ist, wobei die Kurzschlusselemente der Umrichtersysteme dann alle auf dem festlegbaren Spannungspotential liegen. Das erfindungsgemässe leistungselektronische System ist damit denkbar einfach aufgebaut, modular und bezüglich der elektrischen Leistung besonders einfach skalierbar. Dadurch, dass die Kurzschlusselemente der Umrichtersysteme alle auf dem festlegbaren Spannungspotential liegen, kann mittels der Kurzschlusselemente im Falle eines auftretenden Fehlerstromes, beispielweise hervorgerufen durch einen Fehler in einem Teilumrichtersystem, eine galvanische Verbindung aller Phasenspannungsquellen zum festlegbaren Spannungspotential, d.h. insbesondere ein Kurzschlusses der Phasenspannungsquellen, erzielt werden. Der Fehlerstrom teilt sich dann vorteilhaft auf der Seite der Phasenspannungsquellen, aber auch auf die Teilumrichtersysteme der Umrichtersysteme auf, bevor die Umrichtersysteme von den Phasenspannungsquellen getrennt werden. Somit lässt sich auch bei dem erfindungsgemässen leistungselektronischen System ein im Fehlerfall in einem Teilumrichtersystem auftretender Fehlerstrom sehr einfach beherrschen, bevor das die Phasenspannungsquellen abgetrennt werden.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform eines erfindungsgemässen Umrichtersystems,
- Fig. 2: eine zweite Ausführungsform des erfindungsgemässen Umrichtersystems,
- Fig. 3: eine erste Ausführungsform eines erfindungsgemässen leistungselektronischen Systems,
- Fig.4: eine zweite Ausführungsform des erfindungsgemässen leistungselektronischen Systems,
- Fig. 5: eine dritte Ausführungsform des erfindungsgemässen leistungselektronischen Systems,
- Fig. 6: eine vierte Ausführungsform des erfindungsgemässen leistungselektronischen Systems,
- Fig. 7: eine erste Ausführungsform einer Schaltzelle des erfindungsgemässen Umrichtersystems und
- Fig. 8: eine zweite Ausführungsform der Schaltzelle des erfindungsgemässen Umrichtersystems.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

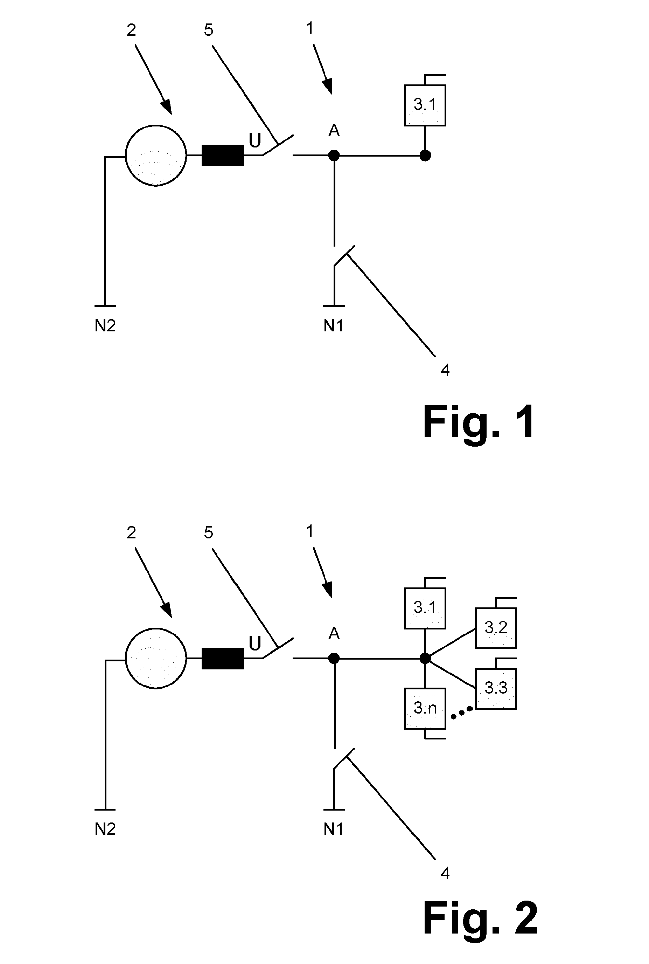

In Fig.1 ist eine erste Ausführungsform eines erfindungsgemässen Umrichtersystems 1 dargestellt. Desweiteren zeigt Fig. 2 eine zweite Ausführungsform des erfindungsgemässen Umrichtersystems 1. Das Umrichtersystem 1 nach Fig. 1 und Fig. 2 umfasst eine Phasenspannungsquelle 2 und allgemein n Teilumrichtersystemen 3.1, ..., 3.n, wobei n ≥ 1 ist. Im Falle n=1, wie beispielhaft in Fig.1 gezeigt, ist das Teilumrichtersystem 3 an einem Verbindungspunkt A mit der Phasenspannungsquelle 2 verbunden. Im Falle n>1, wie beispielhaft in Fig. 2 gezeigt, sind die Teilumrichtersysteme 3.1, ..., 3.n dann an dem Verbindungspunkt A mit der Phasenspannungsquelle 2 verbunden. Nach der Erfindung . Erfindungsgemäss ist nun ein Kurzschlusselement 4 mit dem Verbindungspunkt A mit der Phasenspannungsquelle 2 verbunden, welches Kurzschlusselement 4 auf einem festlegbaren Spannungspotential N1 liegt. Das festlegbare Spannungspotential N1 kann zum Beispiel als Erdpotential festgelegt werden. Das Kurzschlusselement 4 dient der galvanischen Verbindung zum festlegbaren Spannungspotential N1, d.h. insbesondere des Kurzschlusses der Phasenspannungsquelle 2 im Falle eines auftretenden Fehlerstromes aufgrund eines Fehlers in einem Teilumrichtersystem 3.1, ... , 3.n. Der Fehlerstrom besagte teilt sich vorteilhaft auf der Seite der Phasenspannungsquelle 2, aber auch auf das Teilumrichtersystem 3.1 oder auf die Teilumrichtersysteme 3.1, ... , 3.n auf, so dass im Falle mehrerer Teilumrichtersysteme 3.1, ... , 3.n kurzzeitig auch Teilströme durch die vom Fehler nicht betroffenen Teilumrichtersysteme 3.1, ..., 3.n entstehen, bevor das Umrichtersystem von der Phasenspannungsquelle 2 oder von einer typischerweise angeschlossenen elektrischen Last getrennt wird. Somit lässt sich ein im Fehlerfall in einem Teilumrichtersystem 3.1, ..., 3.n auftretender Fehlerstrom sehr einfach beherrschen, bevor das die Phasenspannungsquelle 2 abgetrennt wird.

Vorzugsweise liegt die Phasenspannungsquelle 2 auf einem weiteren festlegbaren Spannungspotential N2, wie beispielhaft in Fig. 1 und Fig. 2 gezeigt. Es hat sich als vorteilhaft erwiesen, dass das festlegbare Spannungspotential N1 des Kurzschlusselementes 4 dem festlegbaren Spannungspotential N2 der Phasenspannungsquell 2 der Umrichtersysteme 1 entspricht, da dann Phasenspannungsquelle effektiv und in gewünschter Weise kurzgeschlossen werden kann.

Zur Abtrennung der Phasenspannungsquelle 2 von dem Teilumrichtersystem 3.1 oder von den Teilumrichtersystemen 3.1, ..., 3.n ist ein Leistungsschalter 5 zwischen den Verbindungspunkt A und der Phasenspannungsquelle 2 eingeschaltet. Vorzugsweise ist der Leistungsschalter 5 als mechanischer Schalter ausgeführt.

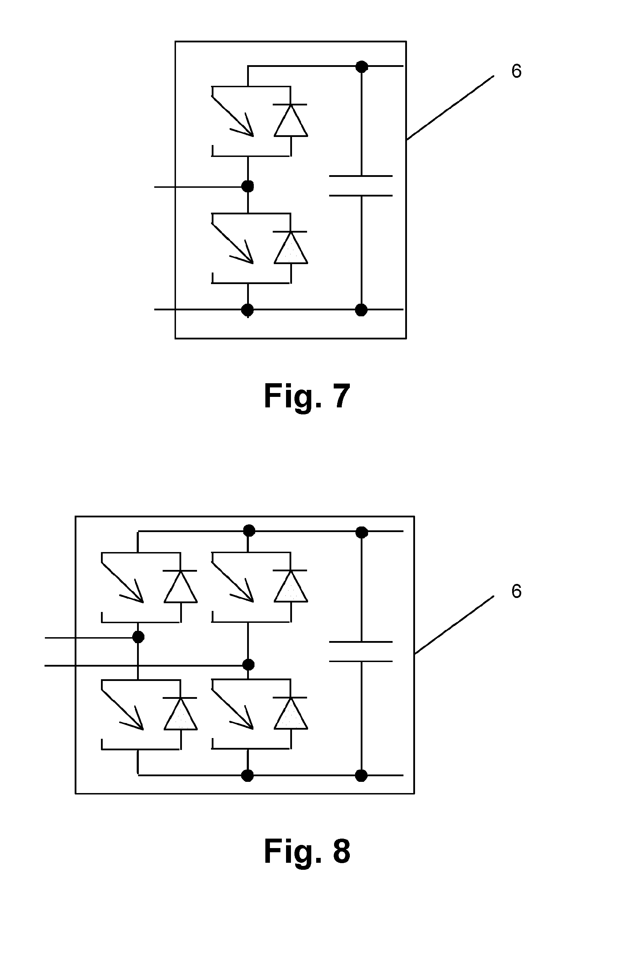

Das Teilumrichtersystem 3.1, ..., 3.n umfasst eine Induktivität L und dazu in Serie geschaltete p in Serie geschaltete zweipolige Schaltzellen 6, wobei p ≥ 2 ist und jede Schaltzelle 6 ansteuerbare bidirektionale Leistungshalbleiterschalter mit gesteuerter unidirektionaler Stromführungsrichtung und einen kapazitiven Energiespeicher aufweist. Das Teilumrichtersystem 3.1, ..., 3.n ist mit der Induktivität L mit dem Verbindungspunkt A verbunden. Der jeweilige ansteuerbare bidirektionale Leistungshalbleiterschalter mit gesteuerter unidirektionaler Stromführungsrichtung der Schaltzellen 6 des Teilumrichtersystems 3.1, ..., 3.n ist insbesondere als Abschaltthyristor (GTO - Gate Turn-Off Thyristor) oder als integrierter Thyristor mit kommutierter Ansteuerelektrode (IGCT - Integrated Gate Commutated Thyristor) mit jeweils einer antiparallel geschalteten Diode ausgebildet. Es ist aber auch denkbar, einen ansteuerbaren bidirektionalen Leistungshalbleiterschalter mit gesteuerter unidirektionaler Stromführungsrichtung beispielsweise als Leistungs-MOSFET mit zusätzlich antiparallel geschalteter Diode oder als Bipolartransistor mit isoliert angeordneter Gateelektrode (IGBT) mit zusätzlich antiparallel geschalteter Diode auszubilden. In Fig. 7 ist beispielhaft eine erste Ausführungsform einer Schaltzelle des erfindungsgemässen Umrichtersystems dargestellt, wobei die ansteuerbaren bidirektionalen Leistungshalbleiterschalter mit gesteuerter unidirektionaler Stromführungsrichtung in Halbbrückenschaltung verschaltet sind und der kapazitive Energiespeicher parallel zu der Halbbrückenschaltung geschaltet ist. Desweiteren ist in Fig. 8 beispielhaft eine zweite Ausführungsform einer Schaltzelle des erfindungsgemässen Umrichtersystems dargestellt, wobei die ansteuerbaren bidirektionalen Leistungshalbleiterschaltern mit gesteuerter unidirektionaler Stromführungsrichtung in Vollbrückenschaltung verschaltet sind und der kapazitive Energiespeicher parallel zu der Vollbrückenschaltung geschaltet ist.

Das Kurzschlusselement 4 ist vorzugsweise durch einen ansteuerbaren Schalter mit bidirektionaler Stromführungsrichtung gebildet. Der ansteuerbare Schalter mit bidirektionaler Stromführungsrichtung ist vorzugsweise als mechanischer Schalter mit pyrotechnischer Auslösung ausgeführt. Ein solcher mechanischer Schalter mit pyrotechnischer Auslösung löst hinreichend schnell aus und stellt eine sichere galvanische Verbindung der Phasenspannungsquelle der Phasen U, V, W, im Falle des Auftretens eines vorstehend genannten Fehlers dar. Alternativ zu dem mechanischen Schalter mit pyrotechnischer Auslösung ist es auch denkbar, dass der jeweilige ansteuerbare Schalter mit bidirektionaler Stromführungsrichtung des Kurzschlusselementes 4 durch zwei antiparallel geschaltete ansteuerbare Leistungshalbleiterschalter gebildet ist.

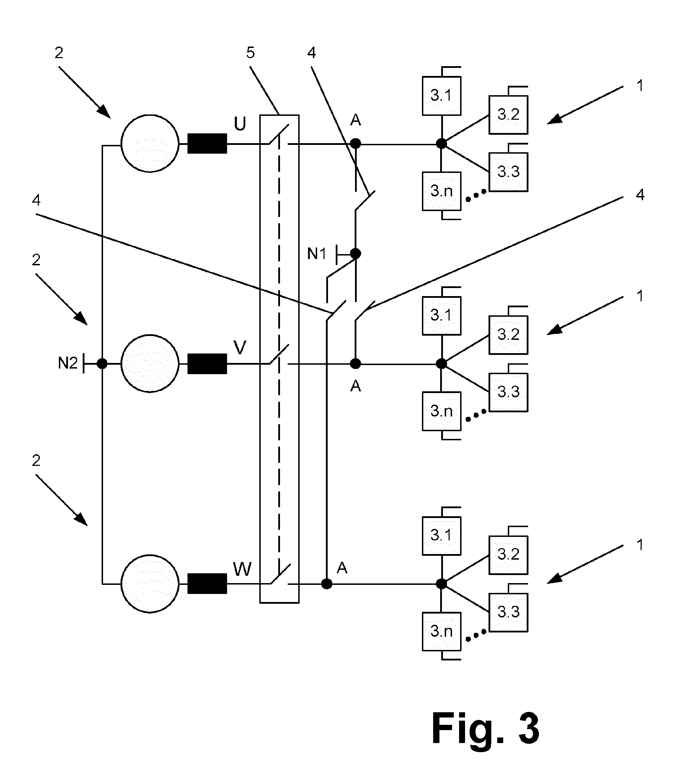

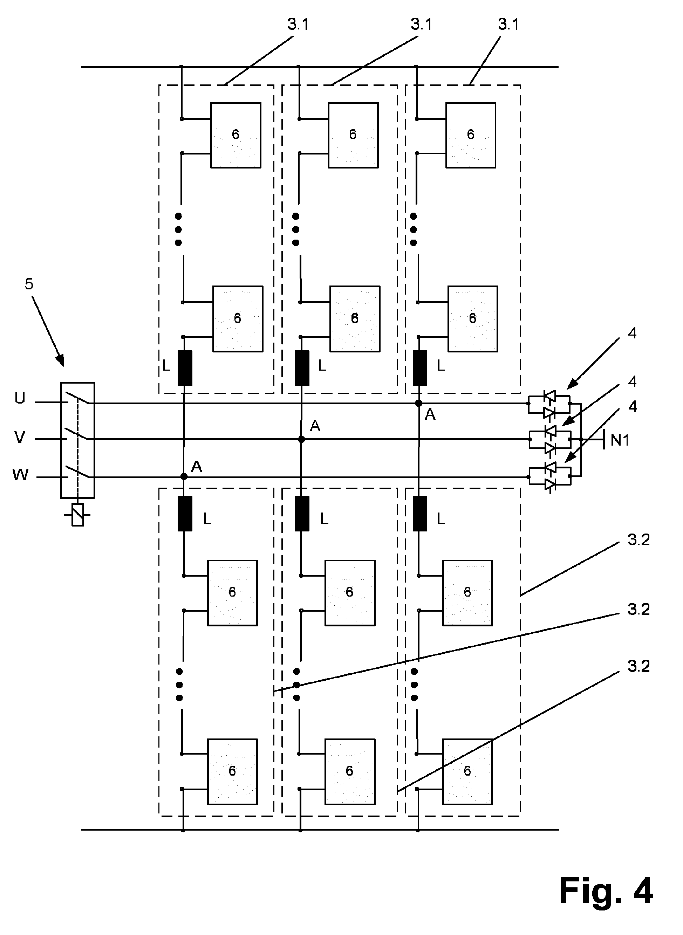

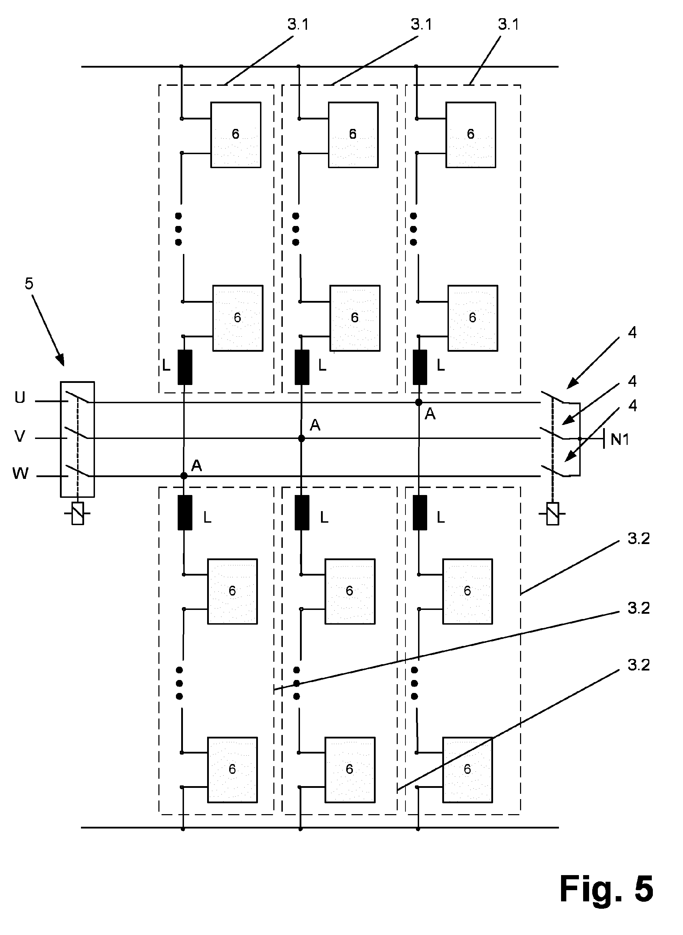

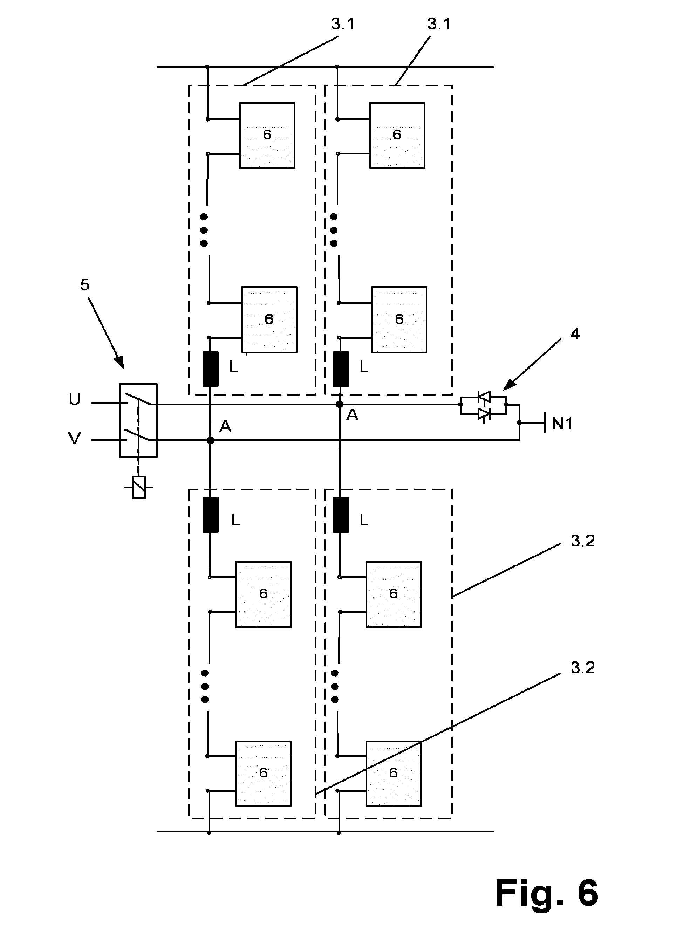

In Fig. 3 ist eine erste Ausführungsform eines erfindungsgemässen leistungselektronischen Systems dargestellt. Ferner ist in Fig. 4 zweite Ausführungsform des erfindungsgemässen leistungselektronischen Systems gezeigt. Fig. 5 zeigt weiterhin eine dritte Ausführungsform des erfindungsgemässen leistungselektronischen Systems. In Fig. 6 ist darüberhinaus eine vierte Ausführungsform des erfindungsgemässen leistungselektronischen Systems dargestellt. Allgemein umfasst das erfindungsgemässe leistungselektronische System m der vorstehend genannten erfindungsgemässen Umrichtersysteme 1, wobei m>1 ist und die Kurzschlusselemente 4 der Umrichtersysteme 1 dann alle auf dem festlegbaren Spannungspotential N1 liegen. Das erfindungsgemässe leistungselektronische System ist damit denkbar einfach aufgebaut, modular und bezüglich der elektrischen Leistung besonders einfach skalierbar. Dadurch, dass die Kurzschlusselemente 4 der Umrichtersysteme 1 alle auf dem festlegbaren Spannungspotential liegen, kann mittels der Kurzschlusselemente 4 im Falle eines auftretenden Fehlerstromes, beispielweise hervorgerufen durch einen Fehler in einem Teilumrichtersystem 3.1, ..., 3.n, eine galvanische Verbindung aller Phasenspannungsquellen 2 zum festlegbaren Spannungspotential N1, d.h. insbesondere ein Kurzschluss der Phasenspannungsquellen 2, erreicht werden. Der Fehlerstrom teilt sich dann vorteilhaft auf der Seite der Phasenspannungsquellen 2, aber auch auf die Teilumrichtersysteme 3.1, ..., 3.n der Umrichtersysteme 1 auf, bevor die Umrichtersysteme 1 von den Phasenspannungsquellen 2 getrennt werden. Somit lässt sich auch bei dem erfindungsgemässen leistungselektronischen System ein im Fehlerfall in einem Teilumrichtersystem 3.1, ... , 3.n auftretender Fehlerstrom sehr einfach beherrschen, bevor das die Phasenspannungsquellen 2 abgetrennt werden. In Fig. 4 und Fig. 5 sind beispielhaft m = 3 Umrichtersysteme 1 dargestellt, wobei jedes Umrichtersystem 1 n = 2 Teilumrichtersysteme 3.1, 3.2 aufweist. Der Übersichtlichkeit halber sind die Phasenspannungsquellen 2 der Umrichtersysteme 1 nicht dargestellt. Ferner ist in Fig. 6 beispielhaft m = 2 Umrichtersysteme 1 dargestellt, wobei jedes Umrichtersystem 1 n = 2 Teilumrichtersysteme 3.1, 3.2 aufweist. Auch in Fig. 6 sind die Phasenspannungsquellen 2 der Umrichtersysteme 1 der Übersichtlichkeit halber nicht gezeigt.

Wie beispielhaft in Fig. 3 dargestellt, liegen die Phasenspannungsquellen 2 der Umrichtersysteme 1 auf einem weiteren festlegbaren, insbesondere gemeinsamen, Spannungspotential N2. Es hat sich als vorteilhaft erwiesen, dass das festlegbare Spannungspotential N1 der Kurzschlusselemente 4 der Umrichtersysteme 1 dem festlegbaren Spannungspotential N2 der Phasenspannungsquellen 2 der Umrichtersysteme 1 entspricht, da dann Phasenspannungsquelle effektiv und in gewünschter Weise kurzgeschlossen werden kann.

### Bezugszeichenliste

- 1: Umrichtersystem
- 2: Phasenspannungsquelle
- 3.1, ...3.n: Teilumrichtersystem
- 4: Kurzschlusselement
- 5: Leistungsschalter
- 6: Schaltzelle
- A: Verbindungspunkt
- L: Induktivität
- N1: festlegbares Potential
- N2: weiteres festlegbares Potential

## Patentansprüche

1. Umrichtersystem (1) mit einer Phasenspannungsquelle (2) und mit n Teilumrichtersystemen (3.1, ..., 3.n), wobei n ≥ 1 ist und im Falle n=1 das Teilumrichtersystem (3.1) an einem Verbindungspunkt (A) mit der Phasenspannungsquelle (2) verbunden ist und im Falle n>1 die Teilumrichtersysteme (3.1, ... , 3.n) an dem Verbindungspunkt (A) mit der Phasenspannungsquelle (2) verbunden sind,
**dadurch gekennzeichnet,**
**dass** mit dem Verbindungspunkt (A) mit der Phasenspannungsquelle (2) ein Kurzschlusselement (4) verbunden ist, welches Kurzschlusselement (4) auf einem festlegbaren Spannungspotential (N1) liegt.

2. Umrichtersystem (1) nach Anspruch 1, **dadurch gekennzeichnet, dass** ein Leistungsschalter (5) zwischen den Verbindungspunkt (A) und der Phasenspannungsquelle (2) eingeschaltet ist.

3. Umrichtersystem (1) nach Anspruch 2, **dadurch gekennzeichnet, dass** der Leistungsschalter (5) als mechanischer Schalter ausgeführt ist.

4. Umrichtersystem (1) nach einem der Ansprüche 1 bis 3, **dadurch gekennzeichnet, dass** das Teilumrichtersystem (3.1, ..., 3.n) eine Induktivität (L) und dazu in Serie geschaltete p in Serie geschaltete zweipolige Schaltzellen (6) umfasst, p ≥ 2 ist und jede Schaltzelle (6) ansteuerbare bidirektionale Leistungshalbleiterschalter mit gesteuerter unidirektionaler Stromführungsrichtung und einen kapazitiven Energiespeicher aufweist, wobei das Teilumrichtersystem (3.1, ..., 3.n) mit der Induktivität (L) mit dem Verbindungspunkt (A) verbunden ist.

5. Umrichtersystem (1) nach einem der Ansprüche 1 bis 4, **dadurch gekennzeichnet, dass** das Kurzschlusselement (4) durch einen ansteuerbaren Schalter mit bidirektionaler Stromführungsrichtung gebildet ist.

6. Umrichtersystem (1) nach Anspruch 5, **dadurch gekennzeichnet, dass** der ansteuerbare Schalter mit bidirektionaler Stromführungsrichtung als mechanischer Schalter mit pyrotechnischer Auslösung ausgeführt ist.

7. Umrichtersystem (1) nach Anspruch 5, **dadurch gekennzeichnet, dass** der ansteuerbare Schalter mit bidirektionaler Stromführungsrichtung durch zwei antiparallel geschaltete ansteuerbare Leistungshalbleiterschalter gebildet ist.

8. Leistungselektronisches System, **dadurch gekennzeichnet, dass** m Umrichtersysteme (1) nach einem der Ansprüche 1 bis 7 vorgesehen sind, wobei m>1 ist, und
dass die Kurzschlusselemente (4) der Umrichtersysteme (1) auf dem festlegbaren Spannungspotential (N1) liegen.

9. Leistungselektronisches System nach Anspruch 8, **dadurch gekennzeichnet, dass** die Phasenspannungsquellen (2) der Umrichtersysteme (1) auf einem weiteren festlegbaren Spannungspotential (N2) liegen.

10. Leistungselektronisches System nach Anspruch 9, **dadurch gekennzeichnet, dass** das festlegbare Spannungspotential (N1) der Kurzschlusselemente (4) der Umrichtersysteme (1) dem festlegbaren Spannungspotential (N2) der Phasenspannungsquellen (2) der Umrichtersysteme (1) entspricht.
